# EUROPÄISCHE PATENTANMELDUNG

(11) **EP 0 709 637 A1**
(43) Veröffentlichungstag der Anmeldung: **01.05.1996**
(21) Anmeldenummer: 95113797.5
(22) Anmeldetag: 01.09.1995
(51) Int. Cl.: F27B 7/22, F16C 13/04

(54) **Laufrollenlagerung**

(30) Priorität: 23.09.1994 DE 4434116
(71) Anmelder: KRUPP POLYSIUS AG, D-59269 Beckum (DE)
(72) Erfinder: Körting, Reinhard, Dipl.-Ing., D-59320 Ennigerloh (DE); Rübbelke, Ludger, Dr.-Ing., D-33378 Rheda-Wiedenbrück (DE); Auf dem Venne, Hans, Ing. (grad.), D-59320 Ennigerloh (DE)
(74) Vertreter: Tetzner, Volkmar, Dr.-Ing. Dr. jur.

(57) **Zusammenfassung**

Die Erfindung betrifft eine Laufrollenlagerung für die Abstützung eines um eine Drehachse (1a) rotierenden Drehrohres (1), enthaltend eine sich um eine Lagerachse (6b) drehende Laufrolle (6), auf deren Außenumfangsfläche (6a) sich eine Umfangslauffläche (Laufring 3) des Drehrohres abstützt, wobei die Laufrolle mit Axialspiel gelagert ist. Erfindungsgemäß ist eine zur Bestimmung der jeweiligen axialen Stellung der Laufrolle dienende Meßeinrichtung (10) vorgesehen, die über eine Steuereinheit (11) mit einer Verstelleinrichtung (12) verbunden ist, die den Winkel zwischen der Lagerachse (6b) der Laufrolle und der Drehachse (1a) des Drehrohres in Abhängigkeit der gemessenen Stellung der Laufrolle (6) verändert.

## Beschreibung

Die Erfindung betrifft eine Laufrollenlagerung für die Abstützung eines um eine Drehachse rotierenden Drehrohres, enthaltend eine sich um eine Lagerachse drehende Laufrolle, auf deren Außenumfangsfläche sich eine Umfangslauffläche des Drehrohres abstützt, wobei die Laufrolle mit Axialspiel gelagert ist.

Es ist erwünscht, die Axialkräfte zwischen der Außenumfangsfläche der Laufrolle und der Umfangslauffläche des Drehrohres möglichst gering zu halten, um dadurch den Querschlupf bei der Übertragung des Umfangsmomentes zu reduzieren. Zu diesem Zweck ist es aus der Praxis bekannt, die Laufrollen für die Abstützung von Drehrohren mit relativ großen Abmessungen schwimmend mit einem Axialspiel im Bereich von 5 bis 10 mm zu lagern.

Diese Art der Lagerung hat jedoch den Nachteil, daß bei bestimmten Betriebszuständen, beispielsweise bei der Schränkung der Lagerachsen oder Fundamentsetzungen, die Laufrollen an die Endbegrenzungen der Lagerung anlaufen und dadurch hohe Axialkräfte zwischen der Außenumfangsfläche der Laufrolle und der Umfangslauffläche des Drehrohres auftreten und die Übertragungsmöglichkeiten für das Umfangsmoment entsprechend reduzieren.

Der Erfindung liegt daher die Aufgabe zugrunde, die Laufrollenlagerung gemäß dem Oberbegriff des Anspruches 1 dahingehend weiterzuentwickeln, daß in jedem Betriebszustand eine optimale Übertragung des Umfangsmomentes möglich ist.

Erfindungsgemäß wird diese Aufgabe durch die kennzeichnenden Merkmale des Anspruches 1 gelöst. Die erfindungsgemäße Laufrollenlagerung ist dadurch gekennzeichnet, daß eine zur Bestimmung der jeweiligen axialen Stellung der Laufrolle dienende Meßeinrichtung vorgesehen ist, die über eine Steuereinheit mit einer Verstelleinrichtung verbunden ist, die den Winkel zwischen der Lagerachse der Laufrolle und der Drehachse des Drehrohres in Abhängigkeit der gemessenen Stellung der Laufrolle verändert.

Auf diese Weise kann durch eine gezielte Schränkung der Lagerachse ein Anlaufen der Laufrolle an die Endbegrenzungen der Lagerung vermieden werden.

Vorzugsweise wird die Laufrolle näherungsweise in einer Mittelposition gehalten.

Weitere Ausgestaltungen der Erfindung sind Gegenstand der Unteransprüche und werden anhand der nachfolgenden Beschreibung einiger Ausführungsbeispiele und der Zeichnung näher erläutert.

In der Zeichnung zeigen:
- Fig.1: eine schematische Darstellung eines Drehrohres, das über zwei Laufrollenstationen abgestützt ist,
- Fig.2: eine Schnittdarstellung längs der Linie II-II der Fig.1,
- Fig.3: eine Schnittdarstellung einer Laufrollenlagerung gemäß einem ersten Ausführungsbeispiel längs der Linie III-III der Fig.1,
- Fig.4: eine schematische Darstellung einer Laufrollenlagerung gemäß einem zweiten Ausführungsbeispiel und
- Fig.5: eine schematische Darstellung einer Laufrollenlagerung gemäß einem dritten Ausführungsbeispiel.

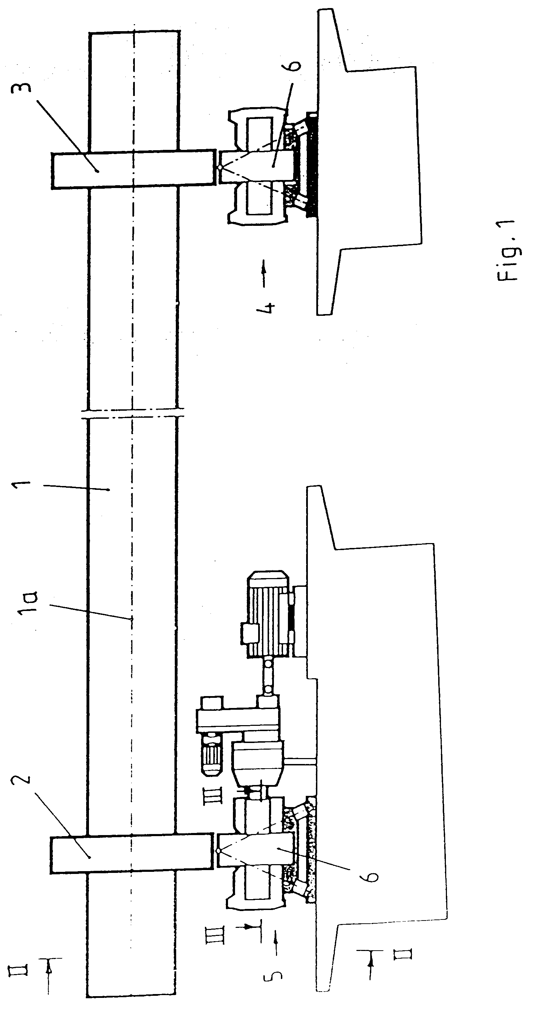

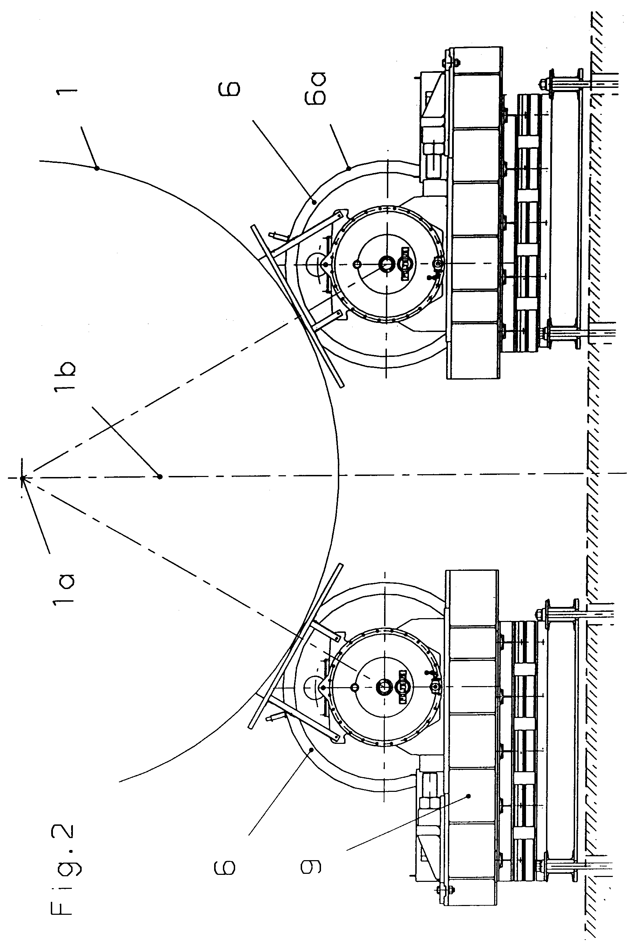

In Fig.1 ist mit 1 ein Drehrohr bezeichnet, das verhältnismäßig große Durchmesser- und Längenabmessungen aufweist und in der Praxis für verschiedene Anwendungsfälle zum Einsatz kommt, wie beispielsweise bei Drehrohröfen, Drehrohrkühlern, Drehtrommeltrocknern und dgl.. Das um eine Drehachse 1a rotierende Drehrohr besitzt einen im wesentlichen zylindrischen Mantel, der zwei mit geeignetem axialem Abstand zueinander drehfest angebrachte Laufringe 2, 3 trägt. Über diese beiden Laufringe 2, 3 ist das Drehrohr 1 auf zwei Laufrollenstationen 4, 5 drehbar gelagert bzw. abgestützt. Jede Laufrollenstation 4, 5 enthält - wie Fig.2 zeigt - zwei symmetrisch zu beiden Seiten der vertikalen Längsmittelebene 1b des Drehrohres 1 angeordnete Laufrollen 6. Auf der Außenumfangsfläche (Lagerfläche) 6a der Laufrolle 6 stützt sich die durch den Laufring 3 gebildete Umfangslauffläche des Drehrohres 1 abwälzend ab, wobei diese Umfangslauffläche auch direkt auf dem zylindrischen Mantel des Drehrohres 1 ausgebildet sein kann.

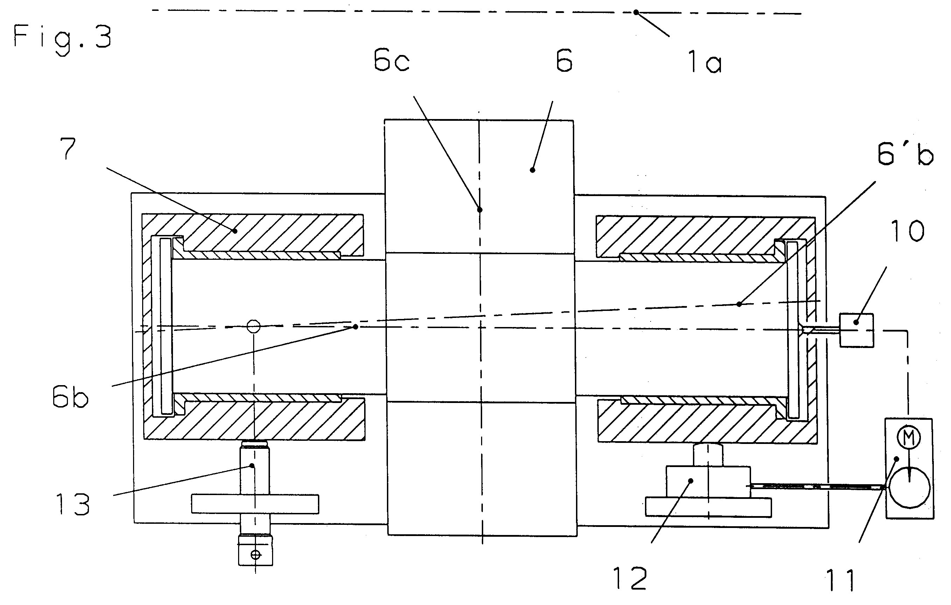

Wie insbesondere aus Fig.3 zu ersehen ist, ist die Laufrolle 6 auf einer Lagerachse 6b angebracht, die an ihren Enden frei drehbar in einem ersten Lager 7 und einem zweiten Lager 8 gelagert ist, die in üblicher Weise durch Wälz- oder Gleitlager gebildet sein können. Über diese Rollenachse 6b und deren Lager 7, 8 wird die Laufrolle 6 von einer Tragkonstruktion 9 getragen, die sich ihrerseits gegenüber einer ortsfesten Stützfläche kippbeweglich abstützt.

Die Lagerachse 6b ist schwimmend, d.h. mit einem Axialspiel, in den beiden Lagern 7, 8 gelagert. Dadurch kann sich die Laufrolle 6 um eine Mittelstellung 6c in axialer Richtung hin- und herbewegen.

Bei bestimmmten Betriebszuständen, beispielsweise bei einer Taumelbewegung der Umfangslauffläche des Drehrohres, einer Schränkung der Lagerachsen, oder bei Fundamentsetzungen, können die Laufrollen 6 an eine der beiden Endbegrenzungen der Lagerung anlaufen, wodurch hohe axiale Kräfte an der Kontaktstelle zwischen Außenumfangsfläche 6a der Laufrolle und Umfangslauffläche des Drehrohres 1 auftreten. Um diesen Zustand zu vermeiden, ist nun erfindungsgemäß eine Meßeinreichtung 10 zur Bestimmung der jeweiligen axialen Stellung der Laufrolle 6 vorgesehen. Diese Meßeinrichtung 10 kann beispielsweise durch einen Wegaufnehmer gebildet werden, der die Stellungsänderung der Laufrolle zu beiden Seiten der Mittelstellung 6c mißt. Es ist jedoch auch denkbar, diese Meßeinrichtung durch zwei Endschalter zu realisieren, die vor Erreichen der jeweiligen End-begrenzungen betätigt werden.

Die Meßeinrichtung 10 steht mit einer Steuereinheit 11 in Verbindung, über die eine Verstelleinrichtung 12 angesteuert wird. Die Verstelleinrichtung 12 wird beispielsweise durch einen hydraulischen Zylinder gebildet, der an einem der beiden Lager, hier am zweiten Lager 8, angreift. Die Verstelleinrichtung 12 könnte beispielsweise auch durch einen Hubspindelantrieb realisiert werden.

Das erste Lager 7 stützt sich bei dem in der Zeichnung dargestellten Ausführungsbeispiel an einer Verstellspindel 13 ab. Eine Verstellung der Verstelleinrichtung 12 bewirkt eine Drehung der gesamten Lageranordnung um einen Drehpunkt 15, der auf der die Lagerachse 6b enthaltenden Längsmittelebene in Höhe der Verstellspindel 13 liegt. Die Lage des Drehpunktes kann im wesentlichen völlig frei gewählt werden. Es muß lediglich sichergestellt werden, daß durch die Verstelleinrichtung 12 der Winkel zwischen der Lagerachse 6b der Laufrolle 6 und der Drehachse 1a des Drehrohres 1 in Abhängigkeit der gemessenen Stellung der Laufrolle veränderbar ist. In Fig.3 ist die Mittellinie 6'b der Lagerachse der Laufrolle nach einer solchen Änderung eingezeichnet. Die Verstelleinrichtung wirkt etwa senkrecht zur vertikalen Längsmittelebene 1b des Drehrohres. In Abhängigkeit von der Drehrichtung, der Lage der Laufrolle und der axialen Richtung, in die sich die Laufrolle von ihrer Mittelstellung wegbewegt, wird die Verstelleinrichtung 12 von der Steuereinheit 11 mit einem entsprechenden Steuersignal beaufschlagt, so daß der Steuerzylinder entweder eine Verschiebung in Richtung auf die Längsmittelebene des Drehrohres oder von dieser weg bewirkt. Durch die Veränderung der Lagerachse 6b in bezug auf die Drehachse 1a des Dreh-rohres 1 bewegt sich die Laufrolle wieder in Richtung ihrer Mittelstellung. Zweckmäßig wird die Verstelleinrichtung erst dann betätigt, wenn die Laufrolle einen vorgegebenen Mittelbereich verlassen hat.

Im Rahmen der Erfindung kann der Verstellweg der Verstelleinrichtung 12 durch eine weitere Meßeinrichtung, beispielsweise einen Wegaufnehmer, gemessen werden.

Bei der Veränderung des Winkels zwischen der Lagerachse 6b der Laufrolle und der Drehachse 1a des Drehrohres spricht man auch von einer Schränkung der Lagerachse.

Der Drehpunkt bzw. die Drehachse der durch die Verstelleinrichtung 12 verursachten Schränkbewegung kann in einem großen Bereich frei gewählt werden.

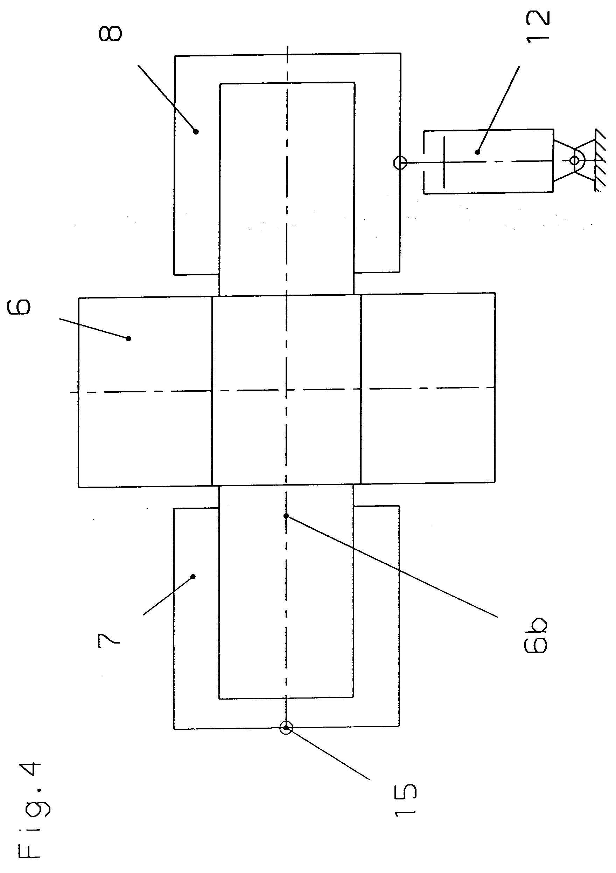

In Fig.4 ist ein zweites Ausführungsbeispiel einer Laufrollenlagerung dargestellt, bei dem dieser Drehpunkt bzw. die Drehachse 15' in axialer Richtung noch vor dem ersten Lager 7 liegt.

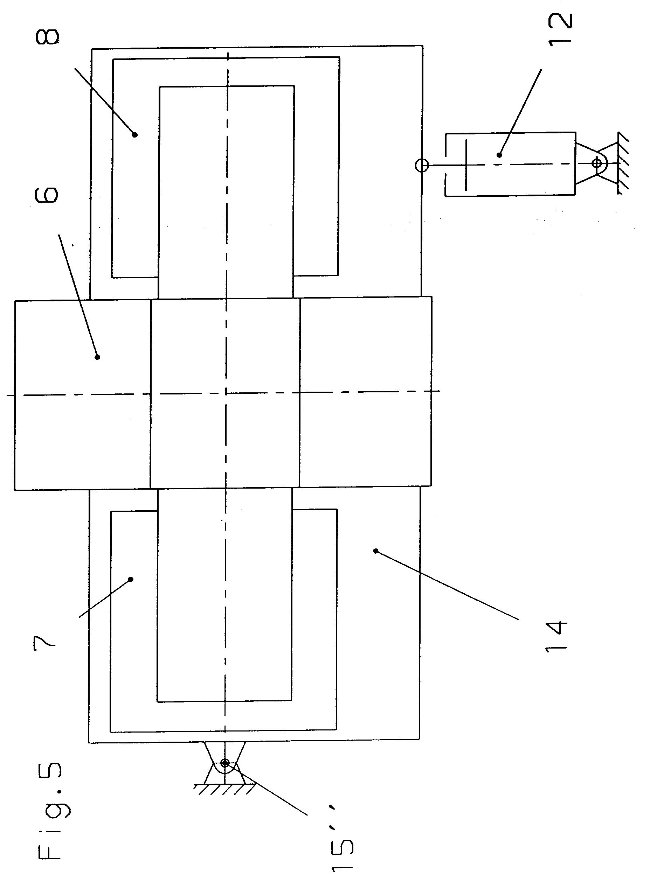

In Fig.5 ist ein drittes, bevorzugtes Ausführungsbeispiel einer Laufrollenlagerung dargestellt, bei dem die Laufrolle 6 mit ihrem ersten und zweiten Laufrollenlager 7, 8 auf einer Grundplatte 14 oder einer sog. Sohlplatte angeordnet ist. Der Drehpunkt dieser Grundplatte 14 liegt vorzugsweise in der Längsmittelebene der Laufrollenlagerung, die auch die Lagerachse 6b enthält. Die Verstelleinrichtung 12 kann an jeder geeigneten Stelle an der Grundplatte 14 angreifen, wobei entweder die Verstelleinrichtung 12 in geeigneter Weise gelagert oder der Kontaktbereich zwischen Verstelleinrichtung und Grundplatte derart ausgebildet ist, daß der durch die Verstellung bewirkten Schwenkbewegung der Grundplatte bzw. Lageranordnung Rechnung getragen wird und es nicht zu Verspannungen zwischen der Verstelleinrichtung 12 und der Grundplatte 14 kommt.

Der Antrieb der Drehrohre kann beispielsweise durch einen sog. Reibradantrieb erfolgen, bei dem zumindest eine der Laufrollen angetrieben wird. Um das erforderliche Drehmoment über die Laufrollen übertragen zu können, müssen jedoch bei dieser Art des Antriebs folgende Bedingungen erfüllt sein:
1. möglichst gleichmäßiges Tragbild zwischen antreibenden Laufrollen und Laufring;
2. möglichst kleine Axialkräfte am der Kontaktfläche zwischen Laufrolle und Laufring, da der Querschlupf die Übertragung des Umfangsmomentes reduziert.

Die erste Bedingung wird durch den Einsatz einer sog. kippbeweglichen Laufrollenstation, wie sie auch in Fig.2 dargestellt ist, erfüllt. Die zweite Bedingung wird besonders vorteilhaft durch die erfindungsgemäße Verstellung der Lageranordnung realisiert. Die erfindungsgemäße Verstelleinrichtung kann jedoch sowohl bei einer kippbeweglichen als auch bei einer starren Laufrollenkonstruktion zum Einsatz kommen.

## Patentansprüche

1. Laufrollenlagerung für die Abstützung eines um eine Drehachse (1a) rotierenden Drehrohres (1), enthaltend eine sich um eine Lagerachse (6b) drehende Laufrolle (6), auf deren Außenumfangsfläche (6a) sich eine Umfangslauffläche (Laufring 3) des Drehrohres abstützt, wobei die Laufrolle mit Axialspiel gelagert ist,
gekennzeichnet durch eine zur Bestimmung der jeweiligen axialen Stellung der Laufrolle dienende Meßeinrichtung (10), die über eine Steuereinheit (11) mit einer Verstelleinrichtung (12) in Verbindung steht, die den Winkel zwischen der Lagerachse (6b) der Laufrolle und der Drehachse (1a) des Drehrohres in Abhängigkeit der gemessenen Stellung der Laufrolle (6) verändert.

2. Laufrollenlagerung nach Anspruch 1, dadurch gekennzeichnet, daß die Meßeinrichtung (10) durch einen Wegaufnehmer gebildet wird.

3. Laufrollenlagerung nach Anspruch 1, dadurch gekennzeichnet, daß die Meßeinrichtung (10) ein Verstellsignal für die Verstelleinrichtung (12) bewirkt, wenn sich die Laufrolle (6) außerhalb eines vorgegebenen Mittelbereichs befindet.

4. Laufrollenlagerung nach Anspruch 1, dadurch gekennzeichnet, daß die Verstelleinrichtung (12) durch einen Hydraulikzylinder gebildet wird.

5. Laufrollenlagerung nach Anspruch 1, dadurch gekennzeichnet, daß die Verstelleinrichtung (12) durch einen Hubspindelantrieb gebildet wird.

6. Laufrollenlagerung nach Anspruch 1, wobei die Laufrolle (6) in einem ersten und einem zweiten Laufrollenlager (7, 8) gehaltert ist, dadurch gekennzeichnet, daß die Verstelleinrichtung (12) mit einem der beiden Laufrollenlager in Wirkverbindung steht.

7. Laufrollenlagerung nach Anspruch 1, wobei die Laufrolle (6) in einem ersten und einem zweiten Laufrollenlager (7, 8) gehaltert ist und die beiden Lager auf einer gemeinsamen Grundplatte (14) angeordnet sind, dadurch gekennzeichnet, daß die Verstelleinrichtung (12) mit der Grundplatte (14) in Wirkzusammenhang steht.

8. Laufrollenlagerung nach einem der vorhergehenden Ansprüche, dadurch gekennzeichnet, daß die Verstelleinrichtung (12) etwa senkrecht zur vertikalen Längsmittelebene (1b) des Drehrohres (1) wirkt.

9. Laufrollenlagerung nach Anspruch 1, wobei der Verstellweg der Verstelleinrichtung (12) durch eine weitere Meßeinrichtung, insbesondere einen Wegaufnehmer, gemessen wird.
